(19) Europäisches Patentamt
European Patent Office
Office européen des brevets

(11) **EP 4 255 835 B1**

(12) **FASCICULE DE BREVET EUROPEEN**

(45) Date de publication et mention
de la délivrance du brevet:
**01.01.2025 Bulletin 2025/01**

(21) Numéro de dépôt: **21823644.6**

(22) Date de dépôt: **22.11.2021**

(51) Classification Internationale des Brevets (IPC):
**B65H 23/182** (2006.01)    **B65H 23/185** (2006.01)
**B29D 30/00** (2006.01)    **B65H 20/32** (2006.01)
**B29D 30/44** (2006.01)    **G07F 11/18** (2006.01)
**G06Q 50/34** (2012.01)    **G07F 11/62** (2006.01)
**G07F 17/32** (2006.01)

(52) Classification Coopérative des Brevets (CPC):
(C-Sets disponibles)
**B65H 23/1825; B29D 30/0016; B65H 20/32;**
**B65H 23/185;** B29D 2030/0038; B65H 2408/214;
B65H 2511/112; B65H 2513/11; B65H 2553/42;
B65H 2801/93                        (Cont.)

(86) Numéro de dépôt international:
**PCT/FR2021/052061**

(87) Numéro de publication internationale:
**WO 2022/123134 (16.06.2022 Gazette 2022/24)**

(54) **PROCÉDÉ ET SYSTÈME DE RÉGULATION DE TENSION D'UNE BANDE DE MATÉRIAU CAOUTCHOUTIQUE**

VERFAHREN UND SYSTEM ZUR SPANNUNGSREGELUNG IN EINEM STREIFEN AUS GUMMIELASTISCHEM MATERIAL

METHOD AND SYSTEM FOR REGULATING TENSION IN A STRIP OF RUBBERY MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.12.2020 FR 2012766**

(43) Date de publication de la demande:
**11.10.2023 Bulletin 2023/41**

(73) Titulaire: **COMPAGNIE GENERALE DES ETABLISSEMENTS MICHELIN**
**63000 Clermont-Ferrand (FR)**

(72) Inventeurs:
• **ROCA-FILELLA, Nicolas**
**63040 CLERMONT-FERRAND Cedex 9 (FR)**
• **KOESSLER, Adrien**
**63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**DE-A1- 102014 207 321    US-A- 4 195 791**
**US-A- 4 500 043**

(52) Classification Coopérative des Brevets (CPC):
(Cont.)

C-Sets
B65H 2511/112, B65H 2220/01;
B65H 2513/11, B65H 2220/02

**Description**

La présente invention se situe dans le domaine de la fabrication de produits comprenant des éléments caoutchoutiques. La présente invention s'applique notamment à la fabrication de pneumatiques, de bandes transporteuses ou de chenilles.

De manière plus précise, la présente invention concerne un système de régulation de tension d'une bande de matériau caoutchoutique pouvant entrer dans la composition de produits tels que mentionnés précédemment.

Dans le cadre de la fabrication d'un produit complexe, tel qu'un pneumatique, différents éléments doivent être déposés sur un support de base, par exemple un tambour. Les différents éléments sont par exemple stockés sous forme de bobine que l'on déroule au fur et à mesure de la pose sur le support.

Avec l'automatisation progressive des ateliers de fabrication, on utilise désormais des robots pour la manipulation des différents composants, notamment les bandes de gomme. Dans ce cadre, il apparaît donc utile de réguler la tension appliquée aux bandes, afin d'éviter une tension trop forte qui pourrait endommager les bandes. En effet, de telles bandes sont notamment réalisées en un matériau viscoélastique, et une tension importante pourrait avoir des influences négatives sur les propriétés géométriques de ce produit, et donc sur la qualité finale de l'assemblage.

On connaît ainsi, du brevet US 4 195 791, un système et un procédé permettant d'effectuer une telle régulation. Ce système comprend une caméra en deux dimensions positionnée de manière à pouvoir acquérir une image d'une bande souple entre un premier élément de déroulage, et un second élément de réception. L'image est ensuite analysée, et la vitesse de déroulage est ensuite adaptée en fonction du résultat de l'analyse.

On a toutefois constaté qu'un tel système présentait un certain nombre d'inconvénients. D'une part, le positionnement de la caméra ne permet pas de faire une analyse correcte dans le cas où la bande forme une courbe asymétrique, c'est-à-dire dans le cas où le premier élément de déroulage et le second élément de réception ne se trouvent pas à la même hauteur.

En outre, un tel système permet une analyse correcte uniquement lorsque la bande de gomme se trouve dans un plan perpendiculaire à la caméra. Tout mouvement dans un autre plan ne peut pas être détecté par la caméra, ce qui peut conduire à une erreur dans la détermination de la tension appliquée à la bande. Il est également connu de DE 10 2014 207321 A1 un système de contrôle de la longueur d'un produit caoutchoutique suspendu selon le préambule de la revendication 4.

L'objet de la présente invention est donc de proposer un système et un procédé permettant de remédier à ces inconvénients.

Ainsi, l'invention concerne un procédé de régulation de la tension d'une bande de produit caoutchoutique entre un élément de déroulage et un élément de réception, le procédé comprenant les étapes suivantes :

- une étape d'acquisition visuelle de la position d'un nombre prédéterminé de points de la bande de produit,
- une étape de modélisation de la courbure de la bande, à partir de la position des points,
- une étape de détermination, en fonction de la courbure, d'un niveau de tension de la bande,
- une étape de transmission à l'élément de déroulage, d'une information de commande pour augmenter ou diminuer la vitesse de déroulage en fonction du niveau déterminé de tension et d'un niveau de référence.

Ainsi, un procédé selon l'invention permet d'effectuer une régulation automatique du mou des bandes de gomme en utilisant une solution visuelle qui permet un contrôle sans contact avec le produit et sans capteur d'effort (dont la sensibilité est plus adaptée pour mesurer des fortes tensions). Elle permet également un contrôle continu de la tension des bandes de gomme tout en les manipulant. On précise ici que dans la présente demande, on pourra parler de tension ou de mou pour désigner des notions similaires.

En outre, un procédé selon l'invention permet également le contrôle de la bande de mou pour des produits dont les extrémités se déplacent dans l'espace. En effet, l'étape de modélisation de la courbure permet d'effectuer une telle régulation même dans le cas où la partie inférieure de la bande de mou, i.e. le point le plus bas de la bande, ne se trouve pas dans le champ visuel d'acquisition, ce qui n'était pas le cas dans les solutions de l'art antérieur.

Dans un mode de réalisation préférentiel, l'étape de modélisation de la courbure de la bande comprend une étape de calcul d'une équation de la chaînette. La chaînette est un objet mathématique connu, qui représente la forme que prend un câble / une chaîne lorsqu'il/elle est suspendu/e par ses extrémités et soumis/se seulement à une force gravitationnelle uniforme, à savoir son propre poids. Cette équation sera ultérieurement détaillée à l'aide des figures. De manière préférentielle encore, cette étape de modélisation comprend en outre une étape d'ajustement par l'application d'un algorithme d'ajustement.

Dans un autre mode de réalisation préférentiel, l'étape d'acquisition comprend une étape d'acquisition d'une image en trois dimensions de la bande de matériau.

En effet, on a constaté que si l'on faisait uniquement une acquisition en deux dimensions, les résultats ne sont pas satisfaisants car le capteur permettant d'effectuer l'acquisition doit nécessairement être perpendiculaire au plan dans lequel le produit est manipulé. Cela demande une grande précision et impose une contrainte sur le produit puisque la direction de son déplacement doit rester dans le même plan.

La présente invention permet au contraire d'estimer la tension d'une bande de produit dont la direction de manipulation n'est pas nécessairement connue et peut varier, ce qui signifie qu'elle n'est pas nécessairement parallèle au plan de la caméra. Cette direction est alors déterminée, dans un procédé selon l'invention, grâce à l'ajustement 3D de la chaînette dans le nuage de point 3D, pour ensuite se positionner dans un plan 2D et utiliser les équations de la chaînette.

De plus, les deux extrémités n'ont pas besoin d'être à la même hauteur car la position du point le plus bas peut être estimé lors de l'ajustement 3D de la chaînette dans le nuage de points 3D.

En conclusion, la technologie 3D permet n'importe quelle position connue de la caméra, tant qu'une partie du produit, continue et assez grande, est dans le champ de vision et est détectable. Et cela même si le point le plus bas n'est pas dans le champ de vision, contrairement à la plupart des solutions existantes. Cela offre donc plus de liberté dans l'implémentation de la caméra.

L'invention concerne également un système de régulation de la tension d'une bande de produit caoutchoutique entre un élément de déroulage et un élément de réception, le système comprenant :

- des moyens d'acquisition de la position d'un nombre prédéterminé de points de la bande,
- des moyens de modélisation de la courbure de la bande, à partir de la position des points,
- des moyens de détermination, en fonction de la courbure, d'un niveau de tension de la bande,
- des moyens de commande de l'élément de déroulage pour augmenter ou diminuer la tension, en fonction du niveau déterminé et d'un niveau de référence.

Dans un mode de réalisation préférentiel, les moyens de modélisation de la courbure comprennent des moyens de calcul mettant en oeuvre une équation de chaînette.

Dans un mode de réalisation préférentiel, les moyens d'acquisition de la position des points comprennent une caméra 3D.

Dans un mode de réalisation préférentiel, le point de sortie de la bande de l'élément déroulant et le point d'entrée de la bande dans l'élément de réception se trouvent à une hauteur différente par rapport au sol.

D'autres modes de réalisation et avantages de l'invention vont être décrits, de manière non limitative, à l'aide des figures, parmi lesquelles :

- la [Fig.1] montre un exemple de système selon l'invention,
- la [Fig 2] permet de détailler l'utilisation d'une équation de chaînette.

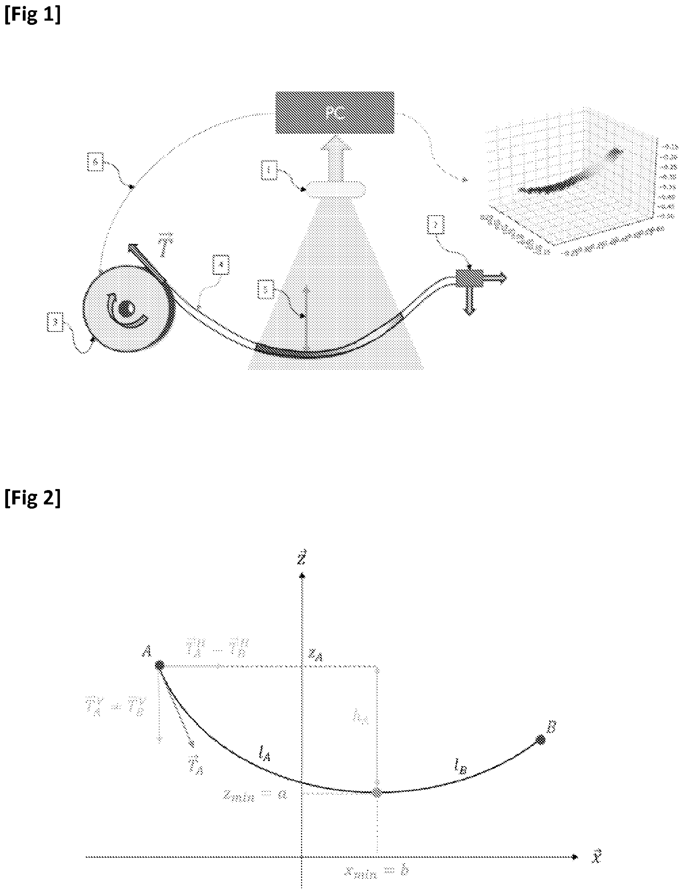

La figure 1 montre un système dans lequel un produit 4, par exemple une bande de gomme, est enroulé sur une bobine motorisée 3. Ce produit est tiré par un robot 2. La bobine 3 est motorisée pour dérouler le produit au fur et à mesure que le robot 2 le pose sur un support de fabrication, non représenté sur cette figure. Le robot 2 peut effectuer des mouvements de translation dans les deux directions, ce qui peut modifier le rayon de courbure du produit, représenté sur la figure par la flèche 5. La bobine 3 exerce sur le produit 4 une tension représentée par la flèche T sur la figure.

L'objectif de la présente invention est de commander la vitesse de rotation de la bobine 3 pour éviter que la tension T exercée sur le produit 4 soit trop importante, ce qui pourrait conduire à un endommagement du produit.

Le système comprend une caméra en trois dimensions 1, dont le champ d'acquisition, dirigé vers le produit 4, est représenté par un faisceau gris clair. Dans cet exemple, le point bas du produit 4 se trouve dans le champ d'acquisition, mais cela n'est pas impératif pour la mise en oeuvre d'un procédé selon l'invention.

Dans l'exemple, la caméra 1 utilise la technologie de stéréovision et de lumière structurée. Les images acquises par la caméra sont envoyées vers un ordinateur PC et les étapes suivantes sont réalisées :

- Grâce à des algorithmes de traitement d'images et des algorithmes de segmentation 3D, le nuage de points 3D correspondant à cette bande est isolé.
- Grâce à des algorithmes d'ajustement 3D par des méthodes de moindres carrés non linéaires, les paramètres d'une équation d'une courbe sont trouvés. L'équation utilisée est celle de la chaînette. L'avantage de cette équation mathématique est que les paramètres qui la caractérisent sont fortement liés à la tension dans l'objet en suspension. Il est donc possible de déterminer visuellement une tension dans le produit.
- En fonction des paramètres trouvés par ajustement de la chaînette dans le nuage des points, de la position du robot qui tient le produit et de la tension désirée dans le produit, une longueur de produit nécessaire est déterminée.
- En comparant la longueur nécessaire et la longueur actuelle, on détermine une vitesse de rotation de la bobine pour augmenter ou diminuer cette longueur, et par conséquence le mou dans la bande.

Cette vitesse de rotation déterminée est alors transmise sous forme d'une instruction 6 à la bobine 3.

Le système de commande fonctionne en boucle fermée, avec une acquisition d'images permanente, ce qui permet d'avoir un contrôle continu du mou.

Pour ce faire, nous nous proposons d'utiliser une caméra 3D qui est capable de récupérer un nuage de points correspondant à chaque bande, une fois placée au-dessus des bandes en suspension. En approximant la courbure de ces dernières grâce au modèle mathématique de la chaînette (aussi appelé vélaire) et un algorithme d'ajustement, il est possible d'estimer la tension maximale dans le produit, dont un des paramètres de ce modèle en est fonction, seulement en « regardant » le produit.

Après traitement numérique des données 3D de la caméra, le PC commande la bobine en rotation à l'aide d'une boucle de commande fermée pour former un mou plus (respectivement moins) important et ainsi diminuer (respectivement augmenter) la tension dans le produit.

Un exemple détaillé de la détermination de cette commande est décrit ci-après :

La bobine est représentée par un cercle et le point d'attache est le point A Initialement, la chaînette est définie du point A au point $B_{init}$. Après avoir saisi le produit, le robot déplace le point $B_{init}$ vers le point $B_{final}$ (toujours dans le sens $+x$ et $-z$). Un point I a pour coordonnée $I(x_I; z_I)$.

Les paramètres utilisés dans cet exemple sont les suivants :

- $\mu_{produit}$ = 0.14 *kg/m*
- *g* = 9.81m/s$^2$
- Coordonnées points *A*(0.5; 3.0), $B_{init}$(1.0; 2.8), $B_{final}$(1.7; 2.75)
- Longueur initiale : $l_0$ = 0.59$m$
- Tension au point A initiale : $T_{A,init}$ = 0.73$N$

La tension désirée est initialement la tension actuelle dans le produit. Cette tension désirée évolue au cours du temps : plus le robot est loin, plus la tension désirée est élevée. En effet, pour un éloignement donné entre *A* et *B,* il existe une tension minimale possible. Si la tension désirée est inférieure à ce minimum, le système risque de diverger car la valeur est inatteignable.

Cette valeur est déterminée en cherchant le minimum de la tension lorsque la longueur varie, dans la configuration finale choisie. Ainsi, on s'assure que la tension désirée finale pourra être atteinte (une marge de sécurité de +0.1/+0.2N est possible).

La suite de la description de cet exemple va être déclinée selon la configuration du système. Dans une première configuration, $x_A$ et le point *B* ne sont pas connus :

La loi de commande sur la longueur suit une loi proportionnelle:

$$\dot{l} = \frac{dl}{dt} = -K_p e$$

Ou avec un correcteur Proportionnel-Intégral-Dérivé (PID) :

$$\dot{l} = \frac{dl}{dt} = -(K_p e + K_i \int e + K_d \dot{e})$$

On utilise ensuite la formule $\omega = \dfrac{l}{R}$ pour retranscrire la commande au moteur de la bobine.

Dans une seconde configuration, les points A et B sont connus :

La loi de commande sur la longueur est une loi de premier ordre permettant de faire converger l'erreur **e** entre la tension désirée et la tension mesurée vers 0, tout en tenant compte l'influence qu'aura une variation de longueur sur la tension à chaque itération :

$$\frac{dl}{dt} = \frac{dl}{dT} * \left(K_p e + \frac{T^d}{dt}\right) = \frac{1}{\mu_{produit} * g * \left(\frac{dc}{dl} + \frac{dh_A}{dl}\right)} * \left(K_p e + \frac{T^d}{dt}\right)$$

Avec

$$\frac{dc}{dl} = \frac{l}{\sqrt{l - (z_B - z_A)}\sqrt{l + (z_B - z_A)}} * \frac{c}{2c \cdot sinh\left(\frac{x_B - x_A}{2c}\right) - (x_B - x_A) \cdot cosh\left(\frac{x_B - x_A}{2c}\right)}$$

$$\frac{dh_A}{dl} = sin\left(\left|arcos\left(\frac{T_A^H}{T_A}\right)\right|\right) = sin\left(\left|arcos\left(\frac{c}{c + h_A}\right)\right|\right)$$

Nous allons maintenant détailler, à l'aide de la figure 2, l'utilisation de l'équation de la chaînette.

Une équation 2D de la chaînette est : $z = a + c\left(cosh\left(\frac{x - b}{c}\right) - 1\right)$

Où ($b$, $a$) est le point le plus bas de la chaînette et c un paramètre de la chaînette directement lié à la tension dans le produit.

La composante horizontale de la tension, constante en tout point $i$ du produit, est définie par :

$$T_i^H = \mu_{produit} * g * c = T_A^H$$

avec $\mu_{produit}$ la masse linéique du produit et $g$ la constante universelle de la gravitation. La composante verticale de la tension en un point $i$ du produit est définie par :

$$T_i^V = \mu_{produit} * g * l_i$$

avec $l_i$ la longueur entre le point de mesure et le point le plus bas. Plus cette dernière est grande, plus la composante verticale est grande (et réciproquement). La tension totale dans le produit, norme des composantes horizontale et verticale, exprimée au point A est :

$$T_A = \mu_{produit} * g * \left(c + (z_a - a)\right) = \mu_{produit} * g * (c + h_A)$$

Cette tension représente la tension maximale que l'on pourra mesurer dans le produit, à condition que le point A soit plus haut que le point B. En limitant cette tension, on s'assure de ne pas mettre excessivement sous tension la bande de gomme.

**Revendications**

1. Procédé de régulation de la tension d'une bande (4) de produit caoutchoutique entre un élément de déroulage et un élément de réception, le procédé comprenant les étapes suivantes :

   - une étape d'acquisition visuelle de la position d'un nombre prédéterminé de points de la bande (4) de produit,
   - une étape de modélisation de la courbure de la bande (4), à partir de la position des points,
   - une étape de détermination, en fonction de la courbure, d'un niveau de tension de la bande (4),
   - une étape de transmission à l'élément de déroulage (3), d'une information de commande pour augmenter ou diminuer la vitesse de déroulage en fonction du niveau déterminé de tension et d'un niveau de référence.

2. Procédé de régulation selon la revendication 1, dans lequel l'étape de modélisation de la courbure de la bande (4) comprend une étape de calcul d'une équation de la chaînette.

3. Procédé de régulation selon la revendication 1 ou 2, dans lequel l'étape d'acquisition comprend une étape d'acquisition d'une image en trois dimensions de la bande (4) de matériau.

4. Système de régulation de la tension d'une bande (4) de produit caoutchoutique entre un élément de déroulage (3) et un élément de réception (2), le système comprenant :

- des moyens d'acquisition (1) de la position d'un nombre prédéterminé de points de la bande (4),
**caractérisé en ce que** le système comprenne additionnellement :

- des moyens de modélisation de la courbure de la bande (4), à partir de la position des points,
- des moyens de détermination, en fonction de la courbure, d'un niveau de tension de la bande (4),
- des moyens de commande de l'élément de déroulage (3) pour augmenter ou diminuer la tension, en fonction du niveau déterminé et d'un niveau de référence.

**5.** Système de régulation selon la revendication précédente, dans lequel les moyens de modélisation de la courbure comprennent des moyens de calcul mettant en oeuvre une équation de chaînette.

**6.** Système de régulation selon la revendication 4 ou 5, dans lequel les moyens d'acquisition de la position des points comprennent une caméra 3D.

**7.** Système de régulation selon l'une des revendications 4 à 6, dans lequel le point de sortie de la bande (4) de l'élément déroulant (3) et le point d'entrée de la bande (4) dans l'élément de réception (2) se trouvent à une hauteur différente par rapport au sol.


**Patentansprüche**

**1.** Verfahren zur Regelung der Spannung eines Streifens (4) aus einem gummielastischen Produkt zwischen einem Abwickelelement und einem Aufnahmeelement, wobei das Verfahren die folgenden Schritte beinhaltet:

- einen Schritt des visuellen Erfassens der Position einer vorbestimmten Anzahl von Punkten des Produktstreifens (4),
- einen Schritt des Modellierens der Krümmung des Streifens (4) anhand der Position der Punkte,
- einen Schritt des Bestimmens, in Abhängigkeit von der Krümmung, eines Spannungsniveaus des Streifens (4),
- einen Schritt des Übertragens, an das Abwickelelement (3), einer Steuerinformation zum Erhöhen oder Verringern der Abwickelgeschwindigkeit in Abhängigkeit von dem bestimmten Spannungsniveau und einem Referenzniveau.

**2.** Regelungsverfahren nach Anspruch 1, wobei der Schritt des Modellierens der Krümmung des Streifens (4) einen Schritt des Berechnens einer Gleichung der Kettenlinie beinhaltet.

**3.** Regelungsverfahren nach Anspruch 1 oder 2, wobei der Schritt des Erfassens einen Schritt des Erfassens eines dreidimensionalen Bildes des Materialstreifens (4) beinhaltet.

**4.** System zur Regelung der Spannung eines Streifens (4) aus einem gummielastischen Produkt zwischen einem Abwickelelement (3) und einem Aufnahmeelement (2), wobei das System Folgendes beinhaltet:

- Mittel zum Erfassen (1) der Position einer vorbestimmten Anzahl von Punkten des Streifens (4), **dadurch gekennzeichnet, dass** das System zusätzlich Folgendes beinhaltet:
- Mittel zum Modellieren der Krümmung des Streifens (4) anhand der Position der Punkte,
- Mittel zum Bestimmen, in Abhängigkeit von der Krümmung, eines Spannungsniveaus des Streifens (4),
- Mittel zum Steuern des Abwickelelements (3), um die Spannung in Abhängigkeit von dem bestimmten Niveau und einem Referenzniveau zu erhöhen oder zu verringern.

**5.** Regelungssystem nach dem vorhergehenden Anspruch, wobei die Mittel zum Modellieren der Krümmung Berechnungsmittel beinhalten, die eine Kettenliniengleichung erstellen.

**6.** Regelungssystem nach Anspruch 4 oder 5, wobei die Mittel zum Erfassen der Position der Punkte eine 3D-Kamera beinhalten.

**7.** Regelungssystem nach einem der Ansprüche 4 bis 6, wobei sich der Austrittspunkt des Streifens (4) aus dem Abwickelelement (3) und der Eintrittspunkt des Streifens (4) in das Aufnahmeelement (2) in Bezug auf den Boden auf einer unterschiedlichen Höhe befinden.

**Claims**

1. Method for regulating the tension of a strip (4) of rubbery product between an unwinding element and a receiving element, the method comprising the following steps:

   - a step of visually acquiring the position of a predetermined number of points of the strip (4) of product,
   - a step of modelling the curvature of the strip (4), on the basis of the position of the points,
   - a step of determining, as a function of the curvature, a level of tension of the strip (4),
   - a step of transmitting, to the unwinding element (3), control information for increasing or decreasing the unwinding speed as a function of the determined level of tension and a reference level.

2. Regulation method according to Claim 1, wherein the step of modelling the curvature of the strip (4) comprises a step of calculating an equation of the catenary.

3. Regulation method according to Claim 1 or 2, wherein the acquisition step comprises a step of acquiring a three-dimensional image of the strip (4) of material.

4. System for regulating the tension of a strip (4) of rubbery product between an unwinding element (3) and a receiving element (2), the system comprising:

   - means (1) for acquiring the position of a predetermined number of points of the strip (4), **characterized in that** the system additionally comprises:
   - means for modelling the curvature of the strip (4), on the basis of the position of the points,
   - means for determining, as a function of the curvature, a level of tension of the strip (4),
   - means for controlling the unwinding element (3) so as to increase or decrease the tension, as a function of the determined level and a reference level.

5. Regulation system according to the preceding claim, wherein the means for modelling the curvature comprise calculation means implementing a catenary equation.

6. Regulation system according to Claim 4 or 5, wherein the means for acquiring the position of the points comprise a 3D camera.

7. Regulation system according to one of Claims 4 to 6, wherein the point at which the strip (4) leaves the unwinding element (3) and the point at which the strip (4) enters the receiving element (2) are at different heights relative to the ground.

**[Fig 1]**

**[Fig 2]**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4195791 A
- DE 102014207321 A1